# EUROPÄISCHE PATENTANMELDUNG

(11) **EP 1 207 092 A2**
(43) Veröffentlichungstag der Anmeldung: **22.05.2002**
(21) Anmeldenummer: 01126206.0
(22) Anmeldetag: 05.11.2001
(51) Int. Cl.: B62D 1/185

(54) **Vorrichtung zur Höhenverstellung eines Lenkrades eines Fahrzeugs sowie zur Übertragung eines Drehmoments von dem Lenkrad auf ein Lenkgestänge**

(30) Priorität: 15.11.2000 DE 10056619
(71) Anmelder: V.W. WERKE VINCENZ WIEDERHOLT GMBH & CO KG, D-59439 Holzwickede (DE)
(72) Erfinder:
(74) Vertreter: Patentanwälte Ostriga & Sonnet

(57) **Zusammenfassung**

Beschrieben und dargestellt ist eine Vorrichtung zur Höhenverstellung eines Lenkrades eines Fahrzeuges sowie zur Übertragung eines Drehmomentes von dem Lenkrad auf ein Lenkgestänge, mit einem Außenrohr (12) und mit einem verschiebbar relativ zu dem Außenrohr (12) und in dem Außenrohr (12) angeordneten Innenrohr (11), wobei Außenrohr (12) und Innenrohr (11) einen aufeinander angepassten, wenigstens teilweise polygonalen, insbesondere im wesentlichen dreieckförmigen, Querschnitt aufweisen, und mit einem Kunststoffelement (13), welches radial zwischen Innenrohr (11) und Außenrohr (12) angeordnet ist, wobei das Kunststoffelement (13) an einem der beiden Rohre (11,12) befestigt ist und Gleitflächen (23) aufweist, die mit Gegengleitflächen (24) des anderen Rohres (11,12) zusammenwirken. Die Besonderheit besteht darin, daß im Bereich der Gleitflächen (23) und der Gegengleitflächen (24) stufenartig ausgebildete Rücksprünge (21) angeordnet sind.

## Beschreibung

Die Erfindung betrifft eine Vorrichtung zur Höhenverstellung eines Lenkrads eines Fahrzeugs sowie zur Übertragung eines Drehmomentes von dem Lenkrad auf ein Lenkgestänge gemäß dem Oberbegriff des Anspruches 1.

Eine derartige druckschriftlich nicht belegbare Vorrichtung sieht vor, das Kunststoffelement fest an dem Außenrohr anzuordnen. Das Innenrohr, welches als Dreikantrohr ausgebildet ist, wird von dem Kunststoffelement geführt und ist innerhalb des Außenrohres, also auch innerhalb des Kunststoffelementes, axial verschiebbar.

Das vorbekannte Kunststoffelement ist hohlzylindrisch und im wesentlichen dreieckförmig ausgebildet und weist eine im wesentlichen durchgehende, glatte Innenumfangsfläche auf. Das Innenrohr ist im wesentlichen dreieckförmig ausgebildet, weist jedoch eine Außenumfangsfläche auf, die geringfügig konkav gekrümmt ist. Der Querschnitt ist somit gegenüber dem Querschnitt eines gleichseitigen Dreiecks verkleinert.

Bei der Vorrichtung gemäß dem Stande der Technik gelingt die Höhenverstellung des Lenkrades insbesondere langfristig nur unzufriedenstellend, da es zu einer Schwergängigkeit und zu Verkantungen des Innenrohres relativ zu dem Kunststoffelement kommen kann. Dies wird bedingt durch Toleranz-Probleme der beiden Teile.

Die Aufgabe der Erfindung wird darin gesehen, eine Vorrichtung gemäß dem Oberbegriff des Anspruchs 1 derart weiterzubilden, daß die im Stand der Technik bekannten Probleme vermindert sind. Die Erfindung löst diese Aufgabe mit den Merkmalen des Anspruches 1, insbesondere mit denen des Kennzeichenteils, und ist demgemäß dadurch gekennzeichnet, daß im Bereich der Gleitflächen und der Gegengleitflächen stufenartig ausgebildete Rücksprünge angeordnet sind.

Das Prinzip der Erfindung besteht somit im wesentlichen darin, stufenartige Rücksprünge vorzusehen, die die Größe der Gleitflächen und die Größe der Gegengleitflächen genau definieren. Durch die stufenartige Ausbildung der Rücksprünge gelingt es, abrupte Übergänge zwischen Gleitflächen bzw. Gegengleitflächen und solchen Flächen herzustellen, die nicht zu dem Gleitspiel beitragen. Die Höhe der Stufe ist dabei prinzipiell beliebig wählbar.

Die exakte Definition der Gleitflächen und der Gegengleitflächen führt zu einer sehr genauen Einstellungsmöglichkeit eines Reibwerts zwischen Kunststoffelement und Innenrohr. Dies ist beim Stand der Technik aufgrund der Krümmung der Außenflächen des Innenrohres nicht möglich.

In diesem Zusammenhang ist darauf hinzuweisen, daß die Toleranzen des Kunststoffelementes grundsätzlich enger gewählt werden können, als die Toleranzen des aus Metall bestehenden Innenrohres. Das Kunststoffelement kann insofern in seinen Maßen auf das Innenrohr abgestimmt werden.

Gemäß einer weiteren vorteilhaften Ausgestaltung der Erfindung ist das Kunststoffelement an dem Außenrohr befestigt. Dies ermöglicht insbesondere. die Übernahme der im Stande der Technik bekannten Anordnung einschließlich der bekannten Montage des Kunststoffelementes an dem Außenrohr.

Gemäß einer weiteren vorteilhaften Ausgestaltung der Erfindung sind die Rücksprünge an der Außenmantelfläche des Innenrohres angeordnet. Dies ermöglicht, bereits beim Herstellungsprozeß des Innenrohres, welches vorzugsweise ein Dreikantrohr ist, die Rücksprünge mit einzuarbeiten. Außerdem bietet sich hier hinsichtlich einer langfristigen Benutzungsdauer der erfindungsgemäßen Vorrichtung der Vorteil aus, daß das in der Regel aus Metall bestehende Innenrohr praktisch keinerlei Verschleißwirkungen unterliegt. Auch die Rücksprünge sind insofern praktisch verschleißfrei. Grundsätzlich ist es auch möglich, die Rücksprünge an der Innenumfangsfläche des Kunststoffelementes vorzusehen, wobei hier jedoch auf Grund der geringeren Härte von Kunststoff gegenüber Metall eine stärkere Abnutzung zu erwarten ist.

Gemäß einer weiteren vorteilhaften Ausgestaltung der Erfindung erstrecken sich die Rücksprünge entlang der Längsrichtung des Innenrohres. Dies bietet die Möglichkeit, bereits bei der Herstellung des Innenrohres die Rücksprünge mit einzuarbeiten.

Gemäß einer weiteren vorteilhaften Ausgestaltung des Kunststoffelementes sind dessen Innenumfangsflächen im wesentlichen rücksprungfrei ausgebildet. Dies ermöglicht eine besondere einfache Herstellung des Kunststoffelementes.

Bei einer weiteren vorteilhaften Ausgestaltung der Erfindung sind die Rücksprünge im wesentlichen symmetrisch zwischen den Scheitelbereichen des als Dreieck ausgebildeten Innenrohres auf den Dreiecksflächen angeordnet. Dies ermöglicht eine vollkommen symmetrische Kraftverteilung und die Möglichkeit, Toleranzen zu vergrößern, ohne die ordnungsgemäße Funktion der Vorrichtung zu beeinträchtigen.

Gemäß einer weiteren Ausgestaltung der Erfindung weist das Innenrohr einen Querschnitt auf, der im wesentlichen dem eines gleichseitigen äußeren Hülldreiecks mit der Seitenlänge H entspricht, wobei die Scheitelbereiche abgerundet sind. Dies bietet einerseits Vorteile hinsichtlich der Herstellung eines derartigen, im wesentlichen dreieckförmigen hohlzylindrischen Innenrohres. Andererseits bietet die Abrundung der Scheitelbereiche besondere Vorteile hinsichtlich des Gleitspiels zwischen Innenrohr und Kunststoffelement.

Gemäß einer besonders vorteilhaften Ausgestaltung der Erfindung liegt das Verhältnis der Länge der Rücksprünge bezogen auf die Seitenlänge des Hülldreiecks im Bereich zwischen 0,2 und 0,6.

Gemäß einer weiteren besonders vorteilhaften Ausgestaltung der Erfindung liegt dieses Verhältnis zwischen 0,35 und 0,45.

Gemäß einer besonders vorteilhaften Ausgestaltung der Erfindung liegt dieses Verhältnis zwischen 0,40 und 0,42. Die genannten Werte für das Verhältnis zwischen der Länge der Rücksprünge bzw. deren Projektion auf die Dreiecksfläche, und der Seitenlänge des Hülldreiecks haben sich experimentell als besonders vorteilhaft zur Ausbildung eines ordnungsgemäßen Gleitspiels herausgestellt.

Gemäß einer weiteren Ausgestaltung der Erfindung weist das Kunststoffelement einen Querschnitt auf, der im wesentlichen dem eines gleichseitigen äußeren Hülldreiecks entspricht, wobei die Scheitelbereiche abgerundet sind. Dies bietet einerseits die Möglichkeit einer besonders einfachen Herstellung eines Kunststoffelementes, sowie andererseits Möglichkeiten hinsichtlich einer einfachen Montage des Kunststoffelementes an dem Außenrohr und Möglichkeiten der Ausgestaltung, insbesondere der Scheitelbereiche des Kunststoffelementes, für ein zufriedenstellendes Gleitspiel bezogen auf das Innenrohr.

Gemäß einer weiteren vorteilhaften Ausgestaltung der Erfindung weist das Kunststoffelement in seinen Scheitelbereichen Abschnitte seiner Innenumfangsfläche auf, die im montierten Zustand der Vorrichtung von den gegenüberliegenden Abschnitten der Außenmantelfläche des Innenrohres beabstandet sind. Dies bietet die Möglichkeit, eine Ausgestaltung von Gleitflächen und Gegengleitflächen derart, daß pro Dreieckseitenfläche der Außenmantelfläche des Innenrohres jeweils zwei völlig ebene, planparallele Gegengleitflächen mit entsprechenden Gleitflächen der Innenumfangsfläche des Kunststoffelementes zusammenwirken. Auf diese Weise kann ein ordnungsgemäßes Gleitspiel bzw. ein gewünschter Reibungswert sehr genau und sicher eingestellt werden. Den Gegengleitflächen am Innenrohr kommt dabei auch die Funktion einer Art Zentrierschräge zu.

Gemäß einer besonders vorteilhaften Ausgestaltung der Erfindung sind sämtliche räumlich gekrümmte Flächenabschnitte der Innenumfangsfläche des Kunststoffelementes und der Außenumfangsfläche des Innenrohrs voneinander beabstandet. Dies ermöglicht, ausschließlich ebene Flächen als Gleitflächen bzw. Gegengleitflächen auszubilden.

Gemäß einer weiteren vorteilhaften Ausgestaltung der Erfindung sind die Gleitflächen und die Gegengleitflächen ausschließlich von ebenen Flächen, insbesondere von planparallelen Flächen gebildet. Dies ermöglicht eine besonders sichere, auch bei langfristiger Benutzung ordnungsgemäße Gleitführung von Innenrohr relativ zum Kunststoffelement.

Weitere Vorteile der Erfindung ergeben sich aus den nicht zitierten Unteransprüchen sowie an Hand der Beschreibung eines in den Figuren dargestellten Ausführungsbeispiels. Darin zeigen
- Fig. 1: in schematischer Ansicht eine erfindungsgemäße Vorrichtung mit einem Innenrohr und einem Außenrohr,
- Fig.2: die Vorrichtung gemäß Fig.1 in einer um 90° bezüglich ihrer Längsachse gedrehten Stellung,
- Fig. 3: einen Querschnitt etwa entlang Schnittlinie III - III in Fig. 1 durch ein Innenrohr gemäß dem Stand der Technik,
- Fig. 4: einen Querschnitt entlang Schnittlinie IV - IV in Fig. 1 durch ein erfindungsgemäßes Innenrohr, und
- Fig. 5: einen Querschnitt durch Innenrohr sowie durch das Kunststoffelement, in welchem sich das Innenrohr befindet.

Gleiche oder identische Teile werden in der nachfolgenden Beschreibung mit gleichen Bezugsziffern bezeichnet.

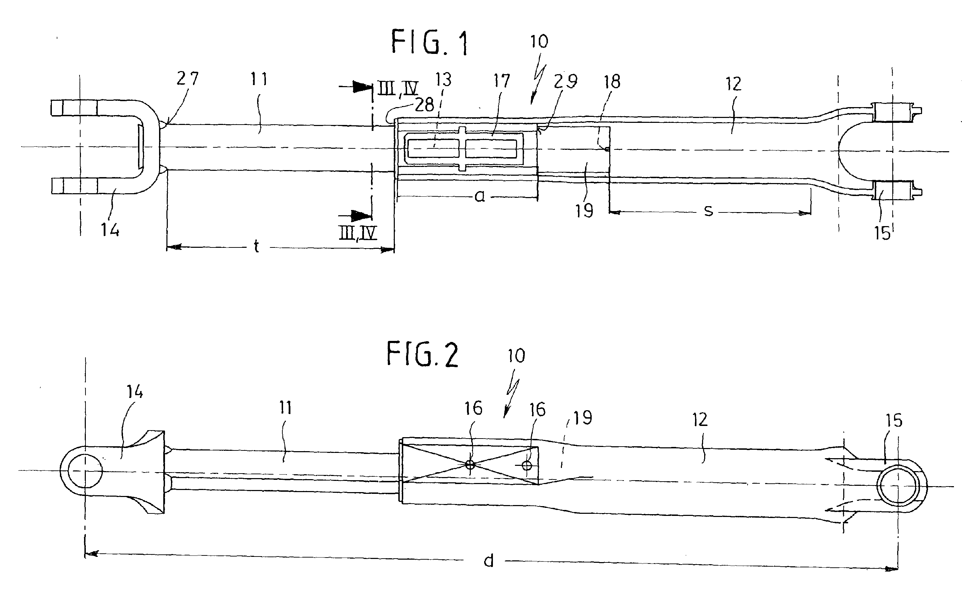

Die in Fig. 1 in ihrer Gesamtheit mit 10 bezeichnete Vorrichtung besteht im wesentlichen aus einem Innenrohr 11, einem Außenrohr 12 und einem Kunststoffelement 13. Sämtliche Körper sind hohlzylindrisch ausgebildet und weisen einen im wesentlichen dreieckförmigen Querschnitt auf. Alternativ sind auch andere polygonale Querschnitte denkbar, wobei es für die Drehmomentübertragung im wesentlichen auf einen Kraftschluß ankommt.

Das bezüglich Fig. 1 linke Ende des Innenrohrs umfaßt eine erste Kardangelenkanbindung 14 zur Verbindung mit einem nicht dargestellten Lenkgestänge und das bezüglich Fig. 1 rechte Ende des Außenrohres 12 weist ein zweites Kardangelenk 15 zur Anbindung an ein nicht dargestelltes Lenkrad auf.

Die Vorrichtung 10 dient im wesentlichen dazu, zwischen einem Lenkrad eines Fahrzeugs, beispielsweise eines Kraftfahrzeugs, welches sich der Betrachter bezüglich Fig. 1 rechts der gewählten Anordnung vorstellen muß und einem Lenkgestänge, links der Anordnung, ein Drehmoment zum Lenken des Fahrzeugs zu übertragen. Außerdem dient die erfindungsgemäße Vorrichtung 10 zur Höhenverstellung eines Lenkrads, d.h. die Distanz d (Fig. 2) zwischen den beiden Kardangelenken 14 und 15 muß unter Gewährleistung der Drehmomentübertragung variiert werden können. Die erfindungsgemäße Vorrichtung 10 wird beispielsweise in einem Kraftfahrzeug geneigt zum Fahrzeugboden angeordnet.

Das Innenrohr 11 besitzt eine kleinere Außenquerschnittsfläche als die Innenquerschnittsfläche des Außenrohres 12. Das Innenrohr 11 ist demzufolge verschiebbar in dem Außenrohr 12 aufgenommen. Um eine sichere und ordnungsgemäße Führung des Innenrohres 11 bezüglich des Außenrohres 12 zu gewährleisten ist ein Kunststoffelement 13, welches ebenfalls hohlzylindrisch mit im wesentlichen dreieckförmigen Querschnitt ausgebildet ist, fest an dem bezüglich Fig. 1 linken äußeren Ende des Außenrohres 12 angeordnet.

Die Befestigung und Montage des Kunststoffelementes 13 verläuft wie folgt: Das Kunststoffelement 13 wird auf das zunächst freie rechte Ende 19 des Innenrohres 11 aufgeschoben. Anschließend werden beispielsweise Prägungen 18 am rechten freien Ende 19 des Innenrohres 11 derart vorgenommen, daß das Kunststoffelement unverlierbar auf dem Innenrohr 11 sitzt, und von diesem nicht mehr gelöst werden kann. Nunmehr wird das Innenrohr 11 mit aufgesetztem Kunststoffelement 13 in das Außenrohr 12 eingeschoben, und zwar derart weit, bis es mit Anschlagflächen 27 an Gegenanschlagflächen 28 des Außenrohres zur Anlage kommt. Das Innenrohr 11 ist in dieser Position maximal in das Außenrohr 12 eingeschoben, so daß die Distanz d (Fig.2) minimal ist.

Nunmehr kann durch Bohrungen 16 in der Wand des Außenrohres 12 Kleber, beispielsweise Heißkleber, in Kleberkanäle 17 hineingespritzt werden, die auf der Innenumfangseite des Außenrohres 12 angeordnet sind. Der Kleber befindet sich somit zwischen der Außenumfangsfläche des Kunststoffelementes 13 und der Innenumfangsfläche des Außenrohres 12. Nach Aushärten des Klebers ist das Kunststoffelement 13 in dem Außenrohr 12 unbeweglich befestigt.

Das Innenrohr 11 kann nunmehr relativ zu dem Kunststoffelement 13 und dem Außenrohr 12 in eine maximale Ausfahrposition gemäß Fig. 1 und 2 ausgefahren werden, die einer maximalen Distanz d entspricht. Der Verschiebeweg s, t wird nunmehr einerseits definiert durch die Anschlagflächen 27 und Gegenanschlagflächen 28 sowie andererseits durch die Prägung 18 und die entsprechenden Anschlagbereiche 29 am Kunststoffelement 13.

Die Erfindung beschäftigt sich damit, eine Verschiebung des Innenrohres 11 relativ zu dem Außenrohr 12 komfortabel zu gestalten, d.h. bei geringem Kraftaufwand für einen Benutzer ohne Verkantungen eine ordnungsgemäße Höhenverstellung eines Lenkrads zu gewährleisten. Zusätzlich ist gewünscht, ein ordnungsgemäßes Funktionieren auch bei starken Belastungen bzw. auch bei langer Lebensdauer zu gewährleisten, die beispielsweise auftritt, wenn ein Fahrzeug von verschiedenen Personen häufig gefahren wird und dementsprechend häufig eine Höhenverstellung des Lenkrads vorgenommen wird.

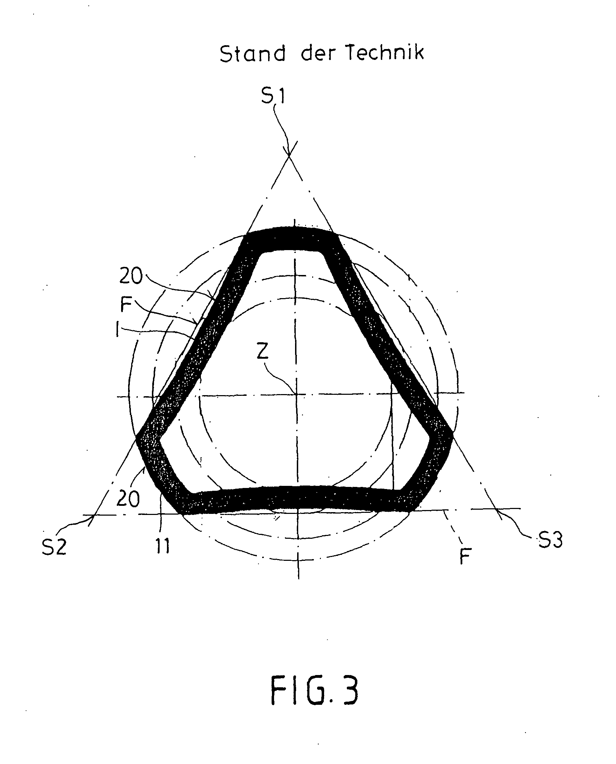

Fig. 3 zeigt im Querschnitt ein Innenrohr 11 aus dem Stand der Technik. Dieses Innenrohr 11 ist hohlzylindrisch ausgebildet und weist einen im wesentlichen dreieckförmigen Querschnitt auf. Die Außenumfangsfläche 20 des Innenrohres 11 liegt teilweise an der Hüllkurve eines Hülldreiecks F an. Dieses Hülldreieck F wird durch die drei Scheitelpunkte S1, S2, S3 als gleichseitiges Dreieck definiert.

Bei Betrachtung der Fig. 3 fällt auf, daß zwischen der Außenumfangsfläche 20 des Innenrohres 11 des Standes der Technik und dem Hülldreieck F ein Freiraum I ist. In diesem Bereich tritt die Außenumfangsfläche 20 bezüglich dem Hülldreieck F zum Zentrum Z hin zurück.

Eine derartige Querschnittsform des Innenrohres 11 mit teilweise konkav gekrümmter Außenmantelfläche 20 verursacht erhebliche Probleme hinsichtlich der Toleranzen der Werkstücke des Innenrohres 11. Es kann hier teilweise zu einem sehr stark erhöhten Reibwert zwischen dem Kunststoffteil 13 und dem Innenrohr 11 kommen, da Gleitflächen am Kunststoffelement 13 und Gegengleitflächen am Innenrohr 11 nicht ordnungsgemäß definiert sind, weil die Krümmung auf Grund der Toleranzen im Innenrohr 11 nicht immer einem idealen Verlauf entspricht.

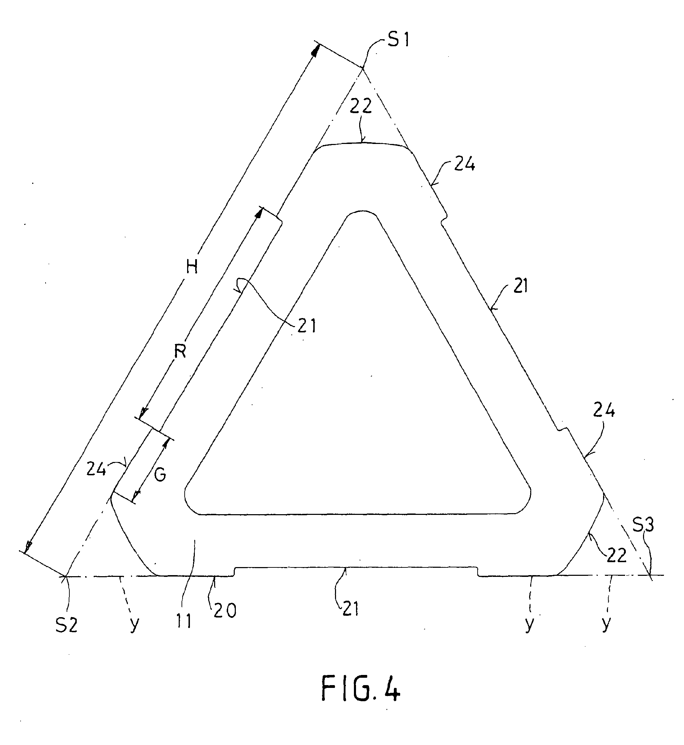

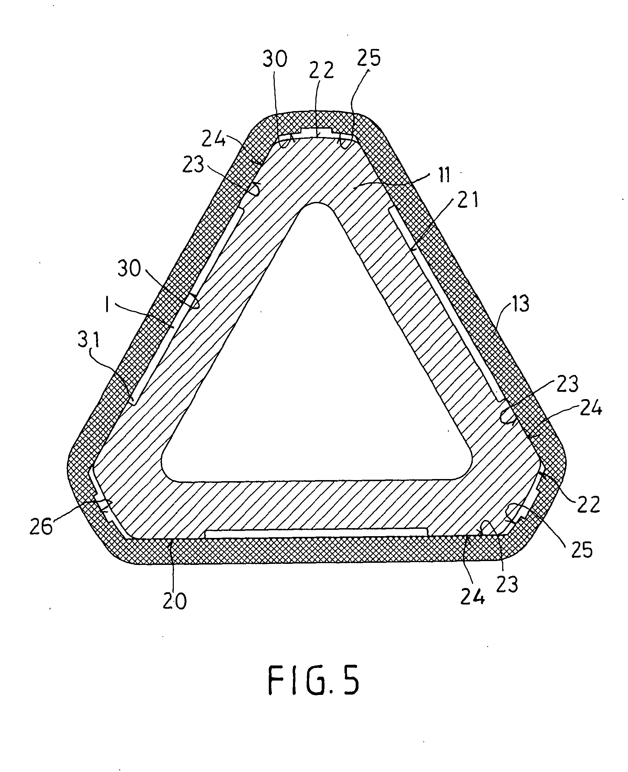

Die erfindungsgemäße Ausbildung der Vorrichtung 10 wird nun an Hand der Fig. 4 und 5 erklärt: Fig. 4 zeigt das erfindungsgemäße Innenrohr 11 in Einzeldarstellung schematisch im Querschnitt. Es paßt sich mit seiner Außenmantelfläche 20 an die Hüllkurve eines Hülldreiecks Y mit der Kantenlänge H an. Die an diese Hüllkurve anliegenden Abschnitte 24 werden als Gegengleitflächen 24 bezeichnet. Diese wirken mit Gleitflächen 23 (Fig. 5) des Kunststoffelementes 13 zusammen. Kunststoffelement 13 und Innenrohr 11 berühren sich ausschließlich mit ihren Gleitflächen 23 und ihren Gegengleitflächen 24, wobei diese Flächen eben ausgebildet und planparallel zueinander angeordnet sind.

Bezüglich der Hüllkurve des Hülldreieckes Y, welches durch die Scheitelpunkte S1, S2 und S3 gebildet wird, steht die Außenmantelfläche 20 des Innenrohres 11 in einigen Bereichen zurück. Diese Rücksprünge 21 bewirken, daß im zusammenmontierten Zustand von Kunststoffelement 13 und Innenrohr 11 ein Innenraum I, eine sogenannte Freifläche entsteht, wobei der Übergang zwischen Gegengleitfläche 24 und Innenraum I abrupt ist.

In den Scheitelbereichen ist das Innenrohr 11 abgerundet. Entlang seiner Außenfläche 20 weist das Innenrohr 11 Abschnitte 22 auf, die von entsprechenden Innenumfangsabschnitten 25 des Kunststoffelementes 13 in montiertem Zustand (Fig. 5) beabstandet sind. Im Bereich dieser Innenumfangsabschnitte 25 des Kunststoffelementes 13, die ebenfalls im Scheitelbereich angeordnet sind, sind zusätzliche Rücksprünge 26 in der Innenumfangsfläche 30 des Kunststoffelementes 13 angeordnet.

Wie sich am besten aus Fig. 5 erkennen läßt, berühren sich die Innenumfangsfläche 30 des Kunststoffelementes 13 und die Außenumfangsfläche des Innenrohres 11 beim. Gegenstand der vorliegenden Erfindung ausschließlich im Bereich planparalleler Flächen 23, 24.

Die Rücksprünge 21 weisen jeweils zwei Stufen 31 auf, wobei die Tiefe des Rücksprungs 21 und somit die Höhe der Stufe 31 beliebig wählbar ist.

Die axiale Länge a des Kunststoffelementes 13 (Fig. 1) ist deutlich geringer als die Länge des Innenrohres 11, vorzugsweise auch geringer als der Verschiebeweg s,t des Innenrohres relativ zu dem Außenrohr 12.

Die Rücksprünge 21 erstrecken sich über die gesamte axiale Länge des Innenrohres 11. Dies bietet Vorteile bei der kontinuierlichen Herstellung des Innenrohres 11.

Die Länge R (Fig. 4) des Rücksprungs 21 bezogen auf deren Projektion auf eine Dreiecksfläche ist deutlich geringer als die Seitenlänge H des Hülldreiecks Y. Das Verhältnis der Länge R des Rücksprungs zu der Seitenlänge H des Hülldreiecks beträgt ca. 0,412 beim Ausführungsbeispiel. Die Seitenlänge H des Hülldreiecks Y kann bei einer realisierten Vorrichtung beispielsweise 2,3 cm betragen.

Das Verhältnis der Länge R des Rücksprungs 21 zu der entsprechenden Länge G einer an dem Innenrohr 11 angeordneten Gegengleitfläche 24 beträgt beim Ausführungsbeispiel etwa 3,27. Ein vorteilhafter Bereich liegt allgemein zwischen 1 und 8.

## Patentansprüche

1. Vorrichtung (10) zur Höhenverstellung eines Lenkrades eines Fahrzeuges sowie zur Übertragung eines Drehmomentes von dem Lenkrad auf ein Lenkgestänge, mit einem Außenrohr (12) und mit einem verschiebbar relativ zu dem Außenrohr (12) und in dem Außenrohr (12) angeordneten Innenrohr (11), wobei Außenrohr (12) und Innenrohr (11) einen aufeinander angepassten, wenigstens teilweise polygonalen, insbesondere im wesentlichen dreieckförmigen, Querschnitt aufweisen, und mit einem Kunststoffelement (13), welches radial zwischen Innenrohr (11) und Außenrohr (12) angeordnet ist, wobei das Kunststoffelement (13) an einem der beiden Rohre (11, 12) befestigt ist und Gleitflächen (23) aufweist, die mit Gegengleitflächen (24) des anderen Rohres (12, 11) zusammenwirken, **dadurch gekennzeichnet, daß** im Bereich der Gleitflächen (23) und der Gegengleitflächen (24) stufenartig ausgebildete Rücksprünge (21) angeordnet sind.

2. Vorrichtung nach Anspruch 1, **dadurch gekennzeichnet, daß** das Kunststoffelement (13) an dem Außenrohr (12) befestigt ist.

3. Vorrichtung nach Anspruch 1 oder 2, **dadurch gekennzeichnet, daß** die Rücksprünge (21) an der Außenmantelfläche (20) des Innenrohres (11) angeordnet sind.

4. Vorrichtung nach einem der vorangegangenen Ansprüche, **dadurch gekennzeichnet, daß** sich die Rücksprünge (21) entlang der Längsrichtung des Innenrohres (11) erstrecken.

5. Vorrichtung nach einem der vorangegangenen Ansprüche, **dadurch gekennzeichnet, daß** die Innenumfangsfläche (30) des Kunststoffelementes (13) im wesentlichen rücksprungfrei ausgebildet ist.

6. Vorrichtung nach einem der vorangegangenen Ansprüche, **dadurch gekennzeichnet, daß** die Rücksprünge (21) im wesentlichen symmetrisch zwischen den Scheitelbereichen des als Dreieck ausgebildeten Innenrohrs (11) auf den Dreiecksflächen angeordnet sind.

7. Vorrichtung nach einem der vorangegangenen Ansprüche, **dadurch gekennzeichnet, daß** das Innenrohr (11) einen Querschnitt aufweist, der im wesentlichen dem eines gleichseitigen äußeren Hülldreiecks (Y) mit der Seitenlänge (H), entspricht, wobei die Scheitelbereiche abgerundet sind.

8. Vorrichtung nach Anspruch 7, **dadurch gekennzeichnet, daß** das Innenrohr (11) hohlzylindrisch ist.

9. Vorrichtung nach Anspruch 7 oder 8, **dadurch gekennzeichnet, daß** das Verhältnis (V) der Länge (R) der Rücksprünge (21) bezogen auf die Seitenlänge (H) des Hülldreiecks (Y) im Bereich zwischen 0,22 und 0,6 liegt.

10. Vorrichtung nach Anspruch 9, **dadurch gekennzeichnet, daß** das Verhältnis (V) zwischen 0,35 und 0,45 liegt.

11. Vorrichtung nach Anspruch 10, **dadurch gekennzeichnet, daß** das Verhältnis (V) zwischen 0,40 und 0,42 liegt.

12. Vorrichtung nach einem der vorangegangenen Ansprüche, **dadurch gekennzeichnet, daß** das Kunststoffelement (13) einen Querschnitt aufweist, der im wesentlichen dem eines gleichseitigen äußeren Hülldreiecks entspricht, wobei die Scheitelbereiche abgerundet sind.

13. Vorrichtung nach einem der vorangegangenen Ansprüche, **dadurch gekennzeichnet, daß** das Kunststoffelement (13) in seinen Scheitelbereichen Abschnitte (25) seiner Innenumfangsfläche (30) aufweist, die im montierten Zustand der Vorrichtung (10) von den gegenüberliegenden Abschnitten (22) der Außenmantelfläche (20) des Innenrohres (11) beabstandet sind.

14. Vorrichtung nach Anspruch 13, **dadurch gekennzeichnet, daß** die Abschnitte (25) des Scheitelbereichs der Innenumfangsfläche (30) des Kunststoffelementes (13) zusätzlich Rücksprünge (26) zweiter Art aufweisen.

15. Vorrichtung nach einem der vorangegangenen Ansprüche, **dadurch gekennzeichnet, daß** sämtliche räumlich gekrümmten Flächenabschnitte (22, 25) der Innenumfangsfläche (30) des Kunststoffelements (13) und der Außenumfangsfläche (20) des Innenrohres (11) voneinander beabstandet sind.

16. Vorrichtung nach einem der vorangegangenen Ansprüche, **dadurch gekennzeichnet, daß** die Gleitflächen (23) und die Gegengleitflächen (24) ausschließlich von ebenen Flächen, insbesondere von planparallelen Flächen, gebildet sind.
